# EUROPEAN PATENT SPECIFICATION

(11) **EP 4 009 027 B1**
(45) Date of publication and mention of the grant of the patent: **12.06.2024**
(21) Application number: 20846061.8
(22) Date of filing: 20.07.2020
(51) Int. Cl.: G01M 99/00

(54) **AIRBAG DEPLOYMENT TESTING SYSTEM**
PRÜFSYSTEM FÜR AIRBAG-ENTFALTUNG
SYSTÈME DE TEST DE DÉPLOIEMENT DE COUSSIN DE SÉCURITÉ GONFLABLE

(30) Priority: 01.08.2019 CN 201910707483
(43) Date of publication of application: 08.06.2022
(73) Proprietor: Hubei Institute of Aerospace Chemotechnology, Xiangyang, Hubei 441003 (CN)
(72) Inventor: LI, Jun, Hubei 441003 (CN); TIAN, Jun, Hubei 441003 (CN); LAN, Hui, Hubei 441003 (CN); XIONG, Zhongnian, Hubei 441003 (CN)
(74) Representative: Sach, Greg Robert
(86) International application number: PCT/CN2020/102925
(87) International publication number: WO 2021/017916

(56) References cited:
- CN-A- 102 768 118
- CN-A- 102 768 119
- CN-A- 108 043 735
- CN-A- 110 426 216
- CN-B- 102 768 118
- CN-U- 208 060 098
- JP-A- 2005 351 840
- KR-A- 20060 025 054
- KR-B1- 100 784 623
- TW-A- 201 231 328
- Angelantoni Test Technologies Srl: "ACS airbag test chamber by Angelantoni Test Technologies", , 30 August 2016 (2016-08-30), XP093062207, Retrieved from the Internet: URL:https://www.youtube.com/watch?v=aq8s4w xg0qQ [retrieved on 2023-07-09]

## Description

### TECHNICAL FIELD

The present disclosure belongs to the technical field of automobile part test, in particular to an airbag deployment testing system.

### BACKGROUND ART

The airbag can complete work within tens of milliseconds after a car collision accident happens, thereby quickly generating an airbag containing a certain amount of gas, so as to reduce injury degree of drivers and passengers and avoid secondary collision. Airbags are mainly distributed in the front and sides of the vehicle. Front airbags in the driver's seat and the co-driver's seat can effectively protect heads, chests and knees of the driver and the passenger at the co-driver's seat at the moment of frontal collision, and side airbags can effectively protect upper limbs, chests, crotches and heads of the passengers in the vehicle at the moment of side collision. Therefore, the safety of drivers and passengers directly depends on the quality of the airbag. However, the airbag in the prior art will shake violently during deployment, so the following problems exist.

Due to lack of regular sampling inspection on the deployment process of the airbag, during the use of the airbag, when the reagent emitted by the airbag is aging and hygroscopic, the user cannot detect the property change data of the reagent in time. Therefore, it is very easy for the airbag to explode during use.

Because working time of the airbag is very short (tens of milliseconds) and the pressure is relatively high, it is necessary to develop an airbag deployment testing system that can detect property data of a deployment speed, an posture, a shape and metal projectiles of the airbag, so as to reduce the probability of airbag explosion accident as much as possible.

CN 102 768 118 B discloses a static unfolding comprehensive performance testing method for an automobile safety air bag, which comprises the following steps of: 1, installing the automobile safety air bag; 2, testing the automobile safety air bag; and 3, carrying out data processing and display. The step 2 comprises the following steps of: filling test information; setting sampling time; and triggering a high-speed camera and a multi-channel data acquisition card by a trigger and automatically sending a trigger signal to an igniter of the automobile safety air bag by the trigger after 5ms. The step 3 comprises the following steps of: completing data processing by an industrial control computer through an internal software program; and displaying and storing test data by the industrial control computer through a man-machine interaction interface, i.e. a, displaying the tested related data on the man-machine interaction interface; b, generating and printing an Excel test report by an automobile safety air bag comprehensive test bed; and c, according to image information and the data, carrying out evaluation on the static unfolding comprehensive performance of the automobile safety air bag by technical personnel.

Using a test chamber for airbag testing is known from the video by Angelantoni Test Technologies Srl: "ACS airbag test chamber by Angelantoni Test Technologies", 30 August 2016 (2016-08-30), XP093062207, retrieved from the Internet: URL:https://www.youtube.com/watch?v=aq8s4wxg0qQ [retrieved on 2023-07-09].

### SUMMARY

The invention is set out in the appended set of claims.

An object of the present disclosure is to provide an airbag deployment testing system which can effectively detect a deployment speed, a posture, a shape of the airbag and whether there are metal projectiles, so as to provide accurate speed design and identification input parameters for an airbag. The above object of the disclosure is obtained through the following technical solution.

An airbag deployment testing system includes a test bench, a high-speed camera, an LED lamp, a safety interlocking system, a control system and an ignition system.

The ignition system is connected with the high-speed camera, the LED lamp and the safety interlocking system; the high-speed camera is connected with the LED lamp; the safety interlocking system is connected with the control system.

A first green lamp, a first red lamp, a second green lamp and a second red lamp are installed on the test bench; the ignition system is used to trigger deployment of an airbag.

The high-speed camera is used for collecting and recording a deployment process of the airbag.

The LED lamp is used to provide brightness and light for recording the deployment process of the airbag by the high-speed camera.

The safety interlocking system includes a personnel identification module and a safety door detection module; the personnel identification module is connected with the first green lamp and the first red lamp.

The personnel identification module is used to identify whether an operator is in a laboratory, and the personnel identification module is connected with the first green lamp and the first red lamp; if the operator is in the laboratory, the first red lamp is on; if the operator is not in the laboratory, the first green lamp is on.

The safety door detection module is used to determine whether a safety door is closed, and the safety door detection module is connected with the second green lamp and the second red lamp.

The control system is used to detect parameter values of the ignition system, the high-speed camera, the LED lamp or the safety interlocking system, and to control whether to activate the ignition system, the high-speed camera, the LED lamp or the safety interlocking system, according to the parameter values.

The present disclosure has the following beneficial effects.
(1) the airbag deployment testing system of the disclosure can test and identify the speed, the posture, the shape of the airbag and whether there are metal projectiles in the airbag deployment process, and can provide data for experimental research and design, delivery inspection and judicial identification of the airbag and the like.
(2) the airbag deployment testing system of the disclosure has the advantages of monitoring the functionality and safety of the airbag ignition system, and displays and alarms the results.
(3) the airbag deployment testing system of the disclosure has the safety interlocking system. During the test process, if there are cases in which an operator operates incorrectly, the test safety door is not normally closed, the operator is not evacuated, etc., the system will automatically lock, so as to ensure the safety of the whole test.
(4) the LED lamp, the high-speed camera and the like used in the airbag deployment testing system of the disclosure have automatic adjustment function, which greatly improves working efficiency.
(5) the smoke dust-removal device in the airbag deployment testing system of the disclosure is linked with the testing system. When smoke is generated during the test, the smoke dust-removal system may automatically start to discharge the smoke during the test from the laboratory.
(6) the airbag deployment testing system of the disclosure has the advantages of small volume, convenient movement, reasonable human-computer interaction, etc.

### BRIEF DESCRIPTION OF THE DRAWINGS

FIG. 1 is a schematic structural diagram of a principle of an airbag deployment testing system according to an embodiment of the present disclosure;
FIG. 2 is a schematic structural diagram of a position of the airbag deployment testing system according to an embodiment of the present disclosure;

List of reference numerals: 1 DAB-1 airbag; 2 high-speed camera; 3 LED lamp.

### DETAILED DESCRIPTION OF THE EMBODIMENTS

### I. An airbag deployment testing system

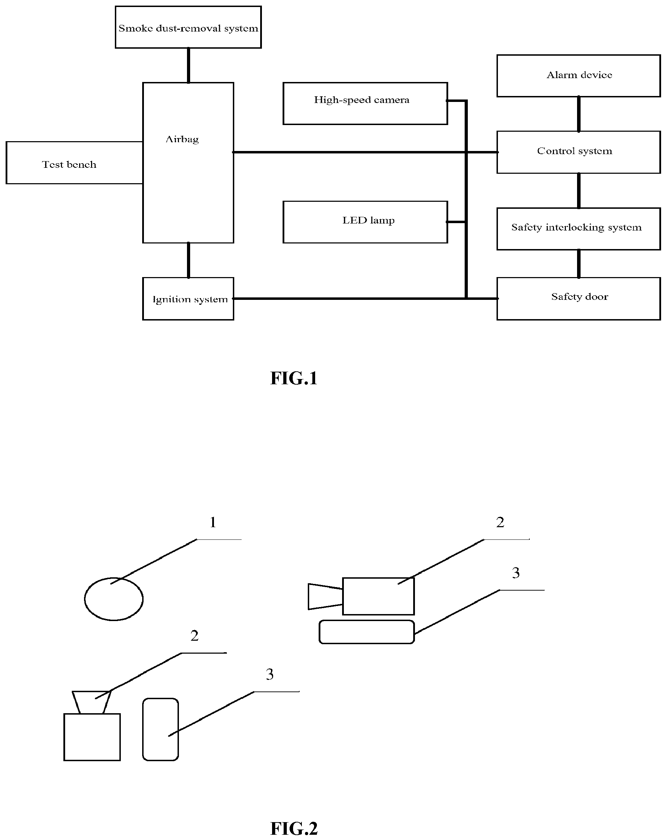

FIG. 1 shows an airbag deployment testing system provided by an embodiment of the disclosure. Referring to Fig. 1, the testing system includes: a test bench, a high-speed camera, an LED lamp, a safety interlocking system, a control system and an ignition system.

The ignition system is connected with the high-speed camera, the LED lamp and the safety interlocking system. The high-speed camera is connected with the LED lamp, and the safety interlocking system is connected with the control system.

The ignition system is used to trigger deployment of an airbag.

The high-speed camera is used to collect and record the deployment process of the airbag.

The LED lamp is used to provide brightness and light for recording the deployment process of the airbag by the high-speed camera.

The safety interlocking system includes a personnel identification module and a safety door detection module.

The personnel identification module is used to identify whether an operator is in a laboratory, and the personnel identification module is connected with a first green lamp and a first red lamp. If the operator is in the laboratory, the first red lamp is on; if the operator is not in the laboratory, the first green lamp is on.

The safety door detection module is used to determine whether the safety door is closed, and the safety door detection module is connected with a second green lamp and a second red lamp.

The control system is used to detect parameter values of the ignition system, the high-speed camera, the LED lamp or the safety interlocking system, and to control whether to activate the ignition system, the high-speed camera, the LED lamp or the safety interlock system according to the parameter values.

Components and working processes of the test bench, the high-speed camera, the LED lamp, the safety interlocking system, the control system and the ignition system will be described in detail below.

According to the claimed invention, a plurality of detection lamps can be installed on the test bench, including a first green lamp, a first red lamp, a second green lamp, a second red lamp and, optionally, a warning lamp.

The high-speed camera is used to collect and record the deployment process, a posture, a shape and projectiles of the airbag.

The LED lamp is used to provide brightness and light for recording the deployment process of the airbag by the high-speed camera, so that the high-speed camera can clearly capture the deployment process, the posture, the shape and the projectiles of the airbag.

According to the claimed invention, the safety interlocking system includes a personnel identification module and a safety door detection module; the personnel identification module uses a face identification method or an infrared laser method to identify whether the operator is in the laboratory.

The personnel identification module includes an infrared sensor and an identification device, and the identification device is connected with the first green lamp and the first red lamp.

The infrared sensor is used to detect data of an object, such as a temperature, an outline and a size, and transmit the data to the identification device. The identification device identifies whether an operator is in the laboratory according to a preset threshold. If so, the first red lamp is on; if not, the first green lamp is on. Whether the operator is in the laboratory during the testing process can be identified by the personnel identification module, so as to ensure safety of the operator.

The safety door detection module is used to determine whether the laboratory safety door is closed, and the safety door detection module is connected with the second green lamp and the second red lamp. The safety door detection module includes a transmitting device, a signal detection device, a receiving device and a determination device. The transmitting device, the signal detection device, the receiving device and the determination device are connected in sequence.

In the embodiment, the transmitting device can be installed outside the safety door. When an operator in front of the test bench presses the safety interlocking detection button, the transmitting device transmits a signal, and the signal detection device detects whether the safety door is closed.

When the signal detection device detects that the safety door is closed, the receiving device (for example, it can be installed on a door frame of the safety door) receives the signal transmitted and feeds it back to the determination device, then the determination device determines that the safety door is closed, and the second green lamp is on.

When the signal detection device detects that the safety door is not closed in place or not closed, and the receiving device cannot receive the signal transmitted, the determination device determines that the safety door is not closed, and the second red lamp is on.

When the first green lamp and the second green lamp are on at the same time, the test will enter a ready state.

When the first red lamp and / or the second red lamp are on, the test cannot be carried out. The operator in the laboratory needs to detect whether the safety door is closed again.

When the personnel identification module identifies that no one is in the laboratory and the safety door detection module determines that the laboratory safety door is closed, the safety interlocking system sends a signal to the control system, the control system may activate the ignition system, the high-speed camera, the LED lamp, etc so as to start the test

When the personnel identification module identifies that an operator is in the laboratory and / or the safety door detection module determines that the safety door is open, the safety interlocking system sends a signal to the control system, so that the whole testing system may automatically lock to ensure the safety of the whole test.

The control system includes a plurality of start buttons to control start of the ignition system, the high-speed camera, the LED lamp and the safety interlocking system respectively. The control system can perform a safety detection on the ignition system of the airbag before ignition, and display the detected results.

The control system is used to detect the following parameters: whether resistance of the ignition system is normal, whether the safety door is closed, whether the operator is in the laboratory, whether the LED lamp is on and so on. The control system detects the above parameters mainly to ensure that the instruments are in a normal state before the test, and the safety of the test process.

Furthermore, the control system also includes an emergency stop button, which is used in the following emergency situations: 1) someone accidentally breaks into the laboratory after the test all is ready; 2) some instruments are abnormal after all of the test is ready; 3) the test is to be carried out or cancelled because of other reasons.

Furthermore, the control system also includes an adjustment button, which is used to adjust light intensity of the LED lamp and a center point of the high-speed camera. The adjustment button can also adjust angles and directions of the high-speed camera and / or LED lamp.

The ignition system provides safe constant current source current for ignition of the airbag. The ignition system is connected with a warning lamp. When the ignition system is in a short circuit state, the warning lamp is green. When the ignition system is in the testing state, the warning lamp is red. The ignition system includes a constant current source, a capacitor, a charging switch, an ignition switch and a high-voltage ignition wire. During use, the charging switch is pressed down firstly, and the constant current source may charge the capacitor. After the capacitor is fully charged, the charging switch may be automatically disconnected. The ignition switch is pressed down, so that the current flows through the high-voltage ignition line to trigger the deployment of the airbag.

Furthermore, the airbag deployment testing system in this embodiment also includes an alarm device, which is connected with an output end of the control system. When the control system detects abnormal results in the deployment of the airbag and / or the deployment of the airbag caused by incorrect operation, the alarm device starts to alarm. It can be understood that the alarm device may be a device with alarm function, such as a siren and an alarm lamp. The alarm device includes an abnormal result alarm device and an incorrect operation alarm device.

The abnormal result alarm device may alarm under the following situations:
1) during the test, someone broke into the laboratory accidently;
2) the resistance is abnormal before the test;
3) light intensity of the LED is insufficient;
4) the interlocking alarm system is abnormal; in some embodiments, alarms of different types of abnormal results can be represented by different numbers and / or different lamps.

The incorrect operation alarm device may alarm under the following situations:
1) an ignition button is pressed down incorrectly when someone is in the laboratory;
2) an ignition button is pressed down incorrectly when the safety door is not closed;
3) an ignition button is pressed down incorrectly, without comprehensive selfinspection.

The abnormal result alarm device and the incorrect operation alarm device are both manual or automatic alarm devices. The above abnormal results are alarmed when the normal process steps are unqualified or not met. The incorrect operation alarm device may alarm under abnormal operations.

Furthermore, the airbag deployment testing system in this embodiment also includes a smoke dust-removal system. The smoke dust-removal device can be linked with the testing system. When smoke is generated during the test, the smoke dust-removal system may automatically start to discharge the smoke generated during the test from the laboratory. In addition, after the test is completed, the smoke dust-removal system is used to remove dust in the laboratory to ensure cleanness of the laboratory environment. In this embodiment, the smoke dust-removal system can be, for example, a smoke filtering system, a smoke cleaning system, etc., which will not be described in detail here.

Furthermore, the airbag includes a curtain airbag.

### II. Working process of the airbag deployment testing system

In the following embodiment, in order to illustrate the working process of the airbag deployment testing system in this embodiment, the airbag is selected as DAB-1 airbag and the LED lamp is selected as the high bright LED lamp.

FIG. 2 is a schematic structural diagram of a position of the airbag deployment testing system provided by the embodiment of the disclosure. Referring to Fig. 2, in this embodiment, two high-speed cameras can be selected to record the deployment process of the DAB-1 airbag, and an imaging angle formed between the two high-speed cameras is 90 degrees, so that all of the DAB-1 airbag at various angles can be captured comprehensively. It can be understood that in other embodiments, one or other number of high-speed cameras can also be selected, and the disclosure is not limited thereto. The alarm device in this embodiment takes the warning lamp as an example. In other embodiments, alarm devices such as sirens can also be selected.

First, the power supply of the DAB-1 airbag deployment testing system is turned on, and the control system controls the high-speed camera and the high bright LED to turn on for preheating. The safety interlocking system is started. At this time, the ignition system is in a short circuit state and the warning lamp is green. The DAB-1 airbag is installed into a chuck of the test bench. After confirming that the airbag is installed correctly, the ignition circuit of the ignition system is connected. The ignition circuit is a part of the ignition system and is located next to the airbag. The ignition circuit is connected with the plug. When the test is carried out, the plug is plugged in directly.

When an operator leaves the laboratory, the safety door is closed. When the safety interlocking system determines that no one is in the laboratory and the safety door is in a closed state, the safety interlocking system sends a signal to the control system to control the ignition system to start.

Then, the control system controls the ignition system to start. The ignition system automatically detects the parameters of the DAB-1 airbag ignition system, such as resistance. When the parameters such as the resistance of the airbag ignition system are confirmed as preset parameters such as preset resistance, the control system adjusts the angles of the high-speed camera and the high bright LED lamp. After the angles meet the test requirements, the test button on the test bench is pressed down. Two high-speed cameras automatically record and store the deployment data of the DAB-1 airbag such as speeds, postures, shapes and projectiles in the deployment process, in two directions perpendicular to each other, and send the obtained deployment data of the airbag to the external computer equipment.

Finally, the external computer equipment generates an analysis report according to the deployment data of the airbag.

The airbag deployment testing system in this embodiment can be used to design and identify input parameters for the development, the production and the like of the airbag.

Specifically, a deployment speed of the airbag is obtained according to the deployment radius and time of the airbag, that is, the deployment percentage is expressed by the deployment radius of the airbag, and a ratio of the percentage to the deployment time of the airbag is the deployment speed of the airbag.

Deployment roundness of the airbag is obtained according to a ratio of the deployed horizontal area of the airbag to an area of a preset standard circle, and a value of the deployment roundness is used to represent the posture of the airbag.

The shape of the airbag includes data such as a length, a width and a shape of the airbag. The projectiles of the airbag mainly include a small amount of protective metal chips in the airbag.

The present disclosure has the following beneficial effects.
(1) The airbag deployment testing system of the disclosure can test and identify the speed, the posture, the shape of the airbag and whether there are metal projectiles in the airbag deployment process, and can provide data for experimental research and design, delivery inspection and judicial identification of the airbag and the like.
(2) The airbag deployment testing system of the disclosure has the advantages of monitoring the functionality and safety of the airbag ignition system, and displays and alarms the results.
(3) The airbag deployment testing system of the disclosure has the safety interlocking system. During the test process, if there are cases in which someone operates incorrectly, the test safety door is not normally closed, the operator is not evacuated, etc., the system will automatically lock, so as to ensure the safety of the whole test.
(4) The LED lamp, the high-speed camera and the like used in the airbag deployment testing system of the disclosure have automatic adjustment function, which greatly improves working efficiency.
(5) The smoke dust-removal device in the airbag deployment testing system of the disclosure is linked with the testing system. When smoke is generated during the test, the smoke dust-removal system may automatically start to discharge the smoke during the test from the laboratory.
(6) The airbag deployment testing system of the disclosure has the advantages of small volume, convenient movement, reasonable human-computer interaction, etc.

Those skilled in the art can realize that the units and algorithm steps of each example described in combination with the embodiments disclosed in the embodiments of the invention can be realized by electronic hardware, or a combination of computer software and electronic hardware. Whether these functions are performed in hardware or software depends on the specific application and design constraints of the technical solution. Professional technicians may use different methods to realize the described functions for each specific application, but such realization should not be considered to be beyond the scope of the present invention, as defined by the appended claims.

In the embodiments provided in the present application, it should be understood that the disclosed devices and methods can be realized in other ways. For example, the device embodiment described above is only schematic. For example, the division of the unit is only a logical function division, and there can be another division mode in actual implementation. For example, multiple units or components can be combined or integrated into another system, or some features can be ignored or not executed. On the other hand, the mutual coupling or direct coupling or communication connection shown or discussed can be indirect coupling or communication connection through some interfaces, devices or units, and can be electrical, mechanical or other forms.

Units described as separate components may or may not be physically separated. Components displayed as units may or may not be physical units, which may be located at one place or distributed on a plurality of network units. Some or all of the units can be selected according to the actual needs to achieve the purpose of the embodiment.

In addition, in each embodiment of the invention, each functional unit can be integrated in one processing unit, each unit can exist separately and physically, or two or more units can be integrated in one unit.

If the functions are realized in the form of software functional units and sold or used as independent products, they can be stored in a computer-readable storage medium. Based on such understanding, the technical solution of the disclosure, in essence, or the part that contributes to the prior art or the part of the technical solution, can be embodied in the form of a software product, which is stored in a storage medium, the software product includes a plurality of instructions to enable a computer device (which can be a personal computer, a server, a network device, etc.) to perform all or part of the steps of the methods described in various embodiments of the present disclosure. The aforementioned storage media includes: U disks, mobile hard disks, ROMs, RAMs, magnetic disks or optical disks and other media that can store program code

The above description is only the specific embodiment of the invention, but the protection scope of the invention, is not limited thereto. Any technician familiar with the technical field can easily think of changes or replacements within the technical scope defined by the appended claims.

## Claims

1. An airbag deployment testing system, comprising a test bench, a high-speed camera, an LED lamp, a safety interlocking system, a control system and an ignition system;
the ignition system is used to trigger deployment of an airbag;
the high-speed camera is used for collecting and recording a deployment process of the airbag;
**characterized in that**
the ignition system is connected with the high-speed camera, the LED lamp and the safety interlocking system; the high-speed camera is connected with the LED lamp; the safety interlocking system is connected with the control system;
a first green lamp, a first red lamp, a second green lamp and a second red lamp are installed on the test bench;
the LED lamp is used to provide brightness and light for recording the deployment process of the airbag by the high-speed camera;
the safety interlocking system comprises a personnel identification module and a safety door detection module, which is used determine whether a safety door of a laboratory, in which the test bench is to be located, is closed;
the personnel identification module is connected with the first green lamp and the first red lamp;
the personnel identification module is used to identify whether a person is ir the laboratory, and the personnel identification module is connected with the first green lamp and the first red lamp; if the operator is in the laboratory, the first red lamp is on; if the operator is not in the laboratory, the first green lamp is on;
the safety door detection module is connected with the second green lamp and the second red lamp;
the control system is used to detect parameter values of the ignition system, the high-speed camera, the LED lamp or the safety interlocking system, and to control whether to activate the ignition system, the high-speed camera, the LED lamp or the safety interlocking system, according to the parameter values;
the testing system further comprises a smoke dust-removal system which is connected with a gas outlet of the airbag and linked with the testing system; when smoke is detected, the smoke dust-removal system automatically starts to discharge the smoke out of the laboratory.

2. The testing system according to claim 1, wherein the personnel identification module comprises an infrared sensor and an identification device, and the identification device is connected with the first green lamp and the first red lamp;
the infrared sensor is used to detect information of an object and transmit the information of the object to the identification device; the identification device identifies whether the operator is in the laboratory according to a preset threshold; if so, the first red lamp is on; if not, the first green lamp is on.

3. The testing system according to claim 1, wherein the safety door detection module comprises a transmitting device, a safety door signal detection device, a receiving device and a determination device;
the transmitting device is used for transmitting a signal, and the signal detection device is used for detecting whether the safety door is closed;
when the signal detection device detects that the safety door is closed, the receiving device receives the signal transmitted and feeds the signal back to the determination device; the determination device determines that the safety door is closed, and the second green lamp is on;
when the signal detection device detects that the safety door is not closed in place or not closed, the receiving device cannot receive the signal transmitted, and the determination device determines that the safety door is not closed in place or not closed, and the second red lamp is on.

4. The testing system according to claim 2, wherein when the first green lamp and the second green lamp are on at a same time, the testing system enters a ready state.

5. The testing system according to claim 1, wherein the control system comprises an adjustment button for adjusting light intensity of the LED lamp, a center point of the high-speed camera, a position of the high-speed camera and a position of the LED lamp.

6. The testing system according to claim 1, wherein the testing system further comprises an alarm device which is connected with the control system; when detection results of the airbag indicate that the detection results are abnormal or incorrect operations are made, the alarm device alarms.

7. The testing system according to claim 6, wherein the alarm device comprises an abnormal result alarm device and an incorrect operation alarm device.

8. The testing system according to claim 1, wherein the airbag comprises a curtain airbag.

9. The testing system according to any one of claims 1-8, wherein the test bench of the testing system is in a form of a chuck.

## Patentansprüche

1. Airbag-Auslöseprüfsystem, das einen Prüfstand, eine Hochgeschwindigkeitskamera, eine LED-Lampe, ein Sicherheitsverriegelungssystem, ein Steuersystem und ein Zündsystem aufweist;
das Zündsystem zur Auslösung eines Airbags verwendet wird;
die Hochgeschwindigkeitskamera zur Erfassung und Aufzeichnung des Auslösevorgangs des Airbags verwendet wird;
**dadurch gekennzeichnet, dass**
das Zündsystem mit der Hochgeschwindigkeitskamera, der LED-Lampe und dem Sicherheitsverriegelungssystem verbunden ist; die Hochgeschwindigkeitskamera mit der LED-Lampe verbunden ist; das Sicherheitsverriegelungssystem mit dem Steuersystem verbunden ist;
eine erste grüne Lampe, eine erste rote Lampe, eine zweite grüne Lampe und eine zweite rote Lampe auf dem Prüfstand installiert sind;
die LED-Lampe zur Bereitstellung von Helligkeit und Licht für die Aufnahme des Auslösevorgangs des Airbags durch die Hochgeschwindigkeitskamera verwendet wird;
das Sicherheitsverriegelungssystem ein Personenidentifikationsmodul und ein Schutztürerkennungsmodul aufweist, das verwendet wird, um zu erkennen, ob eine Schutztür eines Labors, in dem sich der Prüfstand befinden soll, geschlossen ist; das Personenidentifikationsmodul mit der ersten grünen Lampe und der ersten roten Lampe verbunden ist;
das Personenidentifikationsmodul verwendet wird, um festzustellen, ob sich eine Person im Labor befindet,
und das Personenidentifikationsmodul mit der ersten grünen Lampe und der ersten roten Lampe verbunden ist; wenn der Bediener im Labor ist, leuchtet die erste rote Lampe; wenn der Bediener nicht im Labor ist, leuchtet die erste grüne Lampe;
das Schutztürerkennungsmodul mit der zweiten grünen Lampe und der zweiten roten Lampe verbunden ist;
das Steuersystem verwendet wird, um Parameterwerte des Zündsystems, der Hochgeschwindigkeitskamera, der LED-Lampe oder des Sicherheitsverriegelungssystems zu erkennen und zu steuern, ob das Zündsystem, die Hochgeschwindigkeitskamera, die LED-Lampe oder das Sicherheitsverriegelungssystem entsprechend den Parameterwerten aktiviert werden soll;
das Prüfsystem ferner ein Rauchentfernungssystem aufweist, das mit einem Gasauslass des Airbags verbunden und mit dem Prüfsystem gekoppelt ist; wenn Rauch erkannt wird, beginnt das Rauchentfernungssystem automatisch, den Rauch aus dem Labor zu leiten.

2. Prüfsystem nach Anspruch 1, wobei das Personenidentifikationsmodul einen Infrarotsensor und eine Identifikationsvorrichtung aufweist, und die Identifikationsvorrichtung mit der ersten grünen Lampe und der ersten roten Lampe verbunden ist;
der Infrarotsensor dazu verwendet wird, Informationen eines Objekts zu erkennen und die Informationen des Objekts an die Identifikationsvorrichtung zu übertragen; die Identifikationsvorrichtung anhand eines voreingestellten Schwellenwerts erkennt, ob sich der Bediener im Labor aufhält; wenn ja, leuchtet die erste rote Lampe; wenn nicht, leuchtet die erste grüne Lampe.

3. Prüfsystem nach Anspruch 1, wobei das Schutztürerkennungsmodul eine Übertragungsvorrichtung, eine Schutztürsignalerkennungsvorrichtung, eine Empfangsvorrichtung und eine Bestimmungsvorrichtung aufweist;
die Übertragungsvorrichtung zur Übertragung eines Signals verwendet wird, und die Signalerkennungsvorrichtung zur Erkennung verwendet wird, ob die Schutztür geschlossen ist;
wenn die Signalerkennungsvorrichtung erkennt, dass die Schutztür geschlossen ist, empfängt die Empfangsvorrichtung das übertragene Signal und leitet das Signal an die Bestimmungsvorrichtung zurück; die Bestimmungsvorrichtung feststellt, dass die Schutztür geschlossen ist, und die zweite grüne Lampe leuchtet;
wenn die Signalerkennungsvorrichtung erkennt, dass die Schutztür nicht an Ort und Stelle geschlossen oder nicht geschlossen ist, die Empfangsvorrichtung das übertragene Signal nicht empfangen kann, und die Bestimmungsvorrichtung feststellt, dass die Schutztür nicht an Ort und Stelle geschlossen oder nicht geschlossen ist, und die zweite rote Lampe leuchtet.

4. Prüfsystem nach Anspruch 2, wobei das Prüfsystem in einen Bereitschaftszustand übergeht, wenn die erste grüne Lampe und die zweite grüne Lampe gleichzeitig leuchten.

5. Prüfsystem nach Anspruch 1, wobei das Steuersystem einen Einstellknopf zum Einstellen der Lichtintensität der LED-Lampe, eines Mittelpunkts der Hochgeschwindigkeitskamera, einer Position der Hochgeschwindigkeitskamera und einer Position der LED-Lampe aufweist.

6. Prüfsystem nach Anspruch 1, wobei das Prüfsystem ferner eine Alarmvorrichtung aufweist, die mit dem Steuersystem verbunden ist; wenn die Erkennungsergebnisse des Airbags darauf hindeuten, dass die Erkennungsergebnisse anormal sind oder falsche Operationen durchgeführt werden, schlägt die Alarmvorrichtung Alarm.

7. Prüfsystem nach Anspruch 6, wobei die Alarmvorrichtung eine Alarmvorrichtung für abnormale Ergebnisse und eine Alarmvorrichtung für falsche Bedienung aufweist.

8. Prüfsystem nach Anspruch 1, wobei der Airbag einen Vorhangairbag aufweist.

9. Prüfsystem nach einem der Ansprüche 1-8, wobei der Prüfstand des Prüfsystems die Form eines Spannfutters hat.

## Revendications

1. Système d'essai de déploiement d'airbag, comprenant un banc d'essai, une caméra à grande vitesse, une lampe à DEL, un système de verrouillage de sécurité, un système de commande et un système d'allumage ;
le système d'allumage est utilisé pour déclencher le déploiement d'un airbag ;
la caméra à grande vitesse est utilisée pour collecter et enregistrer un processus de déploiement de l'airbag ;
**caractérisé en ce que**
le système d'allumage est connecté à la caméra à grande vitesse, à la lampe à DEL et au système de verrouillage de sécurité ; la caméra à grande vitesse est connectée à la lampe à DEL ; le système de verrouillage de sécurité est connecté au système de commande ;
une première lampe verte, une première lampe rouge, une deuxième lampe verte et une deuxième lampe rouge sont installées sur le banc d'essai ;
la lampe à DEL est utilisée pour fournir de la luminosité et de la lumière pour l'enregistrement du processus de déploiement de l'airbag par la caméra à grande vitesse ;
le système de verrouillage de sécurité comprend un module d'identification de personnel et un module de détection de porte de sécurité, qui est utilisé pour déterminer si une porte de sécurité d'un laboratoire, dans lequel le banc d'essai doit se trouver, est fermée ; le module d'identification de personnel est connecté à la première lampe verte et à la première lampe rouge ;
le module d'identification de personnel est utilisé pour déterminer si une personne se trouve dans le laboratoire,
et le module d'identification de personnel est connecté à la première lampe verte et à la première lampe rouge ; si l'opérateur se trouve dans le laboratoire, la première lampe rouge est allumée ; si l'opérateur ne se trouve pas dans le laboratoire, la première lampe verte est allumée ;
le module de détection de porte de sécurité est connecté à la deuxième lampe verte et à la deuxième lampe rouge ;
le système de commande est utilisé pour détecter des valeurs de paramètre du système d'allumage, de la caméra à grande vitesse, de la lampe à DEL ou du système de verrouillage de sécurité, et pour déterminer s'il faut activer le système d'allumage, la caméra à grande vitesse, la lampe à DEL ou le système de verrouillage de sécurité, selon les valeurs de paramètre ;
le système d'essai comprend en outre un système d'extraction de poussière et de fumée qui est connecté à une sortie de gaz de l'airbag et relié au système d'essai ; lorsque de la fumée est détectée, le système d'extraction de poussière et de fumée commence automatiquement à évacuer la fumée hors du laboratoire.

2. Système d'essai selon la revendication 1, dans lequel le module d'identification de personnel comprend un capteur infrarouge et un dispositif d'identification, et le dispositif d'identification est connecté à la première lampe verte et à la première lampe rouge ;
le capteur infrarouge est utilisé pour détecter des informations d'un objet et transmettre les informations de l'objet au dispositif d'identification ; le dispositif d'identification détermine si l'opérateur se trouve dans le laboratoire selon un seuil prédéfini ; si tel est le cas, la première lampe rouge est allumée ; dans le cas contraire, la première lampe verte est allumée.

3. Système d'essai selon la revendication 1, dans lequel le module de détection de porte de sécurité comprend un dispositif de transmission, un dispositif de détection de signal de porte de sécurité, un dispositif de réception et un dispositif de détermination ;
le dispositif de transmission est utilisé pour transmettre un signal et le dispositif de détection de signal est utilisé pour détecter si la porte de sécurité est fermée ;
lorsque le dispositif de détection de signal détecte que la porte de sécurité est fermée, le dispositif de réception reçoit le signal transmis et renvoie le signal au dispositif de détermination ; le dispositif de détermination détermine que la porte de sécurité est fermée et la deuxième lampe verte est allumée ;
lorsque le dispositif de détection de signal détecte que la porte de sécurité n'est pas correctement fermée ou n'est pas fermée, le dispositif de réception ne peut pas recevoir le signal transmis, et le dispositif de détermination détermine que la porte de sécurité n'est pas correctement fermée ou n'est pas fermée, et la deuxième lampe rouge est allumée.

4. Système d'essai selon la revendication 2, dans lequel, lorsque la première lampe verte et la deuxième lampe verte sont allumées simultanément, le système d'essai entre dans un état prêt.

5. Système d'essai selon la revendication 1, dans lequel le système de commande comprend un bouton de réglage pour régler l'intensité lumineuse de la lampe à DEL, un point central de la caméra à grande vitesse, une position de la caméra à grande vitesse et une position de la lampe à DEL.

6. Système d'essai selon la revendication 1, dans lequel le système d'essai comprend en outre un dispositif d'alarme qui est connecté au système de commande ; lorsque des résultats de détection de l'airbag indiquent que les résultats de détection sont anormaux ou que des opérations incorrectes sont effectuées, le dispositif d'alarme se déclenche.

7. Système d'essai selon la revendication 6, dans lequel le dispositif d'alarme comprend un dispositif d'alarme en cas de résultats anormaux et un dispositif d'alarme en cas d'opérations incorrectes.

8. Système d'essai selon la revendication 1 dans lequel l'airbag comprend un rideau gonflable.

9. Système d'essai selon l'une quelconque des revendications 1 à 8, dans lequel le banc d'essai du système d'essai se présente sous la forme d'un mandrin.
